# EUROPÄISCHE PATENTSCHRIFT

(11) **EP 1 558 883 B1**
(45) Veröffentlichungstag und Bekanntmachung des Hinweises auf die Patenterteilung: **22.08.2007**
(21) Anmeldenummer: 03758002.4
(22) Anmeldetag: 16.10.2003
(51) Int. Cl.: F25D 17/04, F24F 13/10, F16K 3/08

(54) **NO-FROST-KäLTEGERäT**
NO-FROST REFRIGERATOR
REFRIGERATEUR SANS GIVRE

(30) Priorität: 29.10.2002 DE 10250393
(43) Veröffentlichungstag der Anmeldung: 03.08.2005
(73) Patentinhaber: BSH Bosch und Siemens Hausgeräte GmbH, 81739 München (DE)
(72) Erfinder: KORDON, Rolf, 89537 Giengen (DE); PRADEL, Renate, 89537 Giengen/Huerben (DE)
(86) Internationale Anmeldenummer: PCT/EP2003/011499
(87) Internationale Veröffentlichungsnummer: WO 2004/040211

(56) Entgegenhaltungen:
- WO-A-02/16843
- DE-A- 19 806 041
- DE-U- 7 924 975
- FR-A- 2 488 500
- US-A- 3 952 542
- US-A- 4 920 758
- US-B1- 6 240 735
- PATENT ABSTRACTS OF JAPAN vol. 013, no. 360 (M-858), 11. August 1989 (1989-08-11) -& JP 01 118317 A (TOYO KINZOKU KK), 10. Mai 1989 (1989-05-10)

## Beschreibung

Die vorliegende Erfindung betrifft ein No-Frost-Kältegerät. Ein solches Kältegerät umfasst herkömmlicherweise in einem wärmeisolierenden Gehäuse eine Lagerkammer zum Aufnehmen von Kühlgut und eine Verdampferkammer, in der ein Verdampfer angeordnet ist und die mit der Lagerkammer über einen Luftdurchgang in Verbindung steht. Zum Kühlen des Lageraums wird über den Luftdurchgang Luft zwischen den beiden Kammern umgewälzt. Die Trennung von Lagerkammer und Verdampferkammer ermöglicht es, den Verdampfer bei Bedarf abzutauen, ohne dass dies notwendigerweise zu einer Erwärmung der Lagerkammer führt.

Um die Stärke des Luftaustauschs zwischen Verdampferkammer und Lagerkammer zu regeln und beim Abtauen des Verdampfers diesen Luftaustausch möglichst vollständig zu unterbinden, ist in dem Luftdurchgang eines solchen Geräts üblicherweise ein Regelkörper vorgesehen, der zwischen verschiedenen Stellungen bewegbar ist, in denen er den freien Querschnitt einer Luftdurchgangsöffnung in dem Luftdurchgang unterschiedlich stark überdeckt. Es sind diverse Konstruktionen solcher Regelkörper in Gebrauch, z.B. um eine Achse schwenkbare Klappen, in der Ebene der Luftdurchgangsöffnung verschiebbare Schieber etc.. Bei einem Schieber besteht die Gefahr, dass er an die Luftdurchgangsöffnung begrenzenden Wandflächen festfriert und so seine Aufgabe zumindest zeitweilig nicht erfüllen kann. Das Problem des Festfrierens lässt sich zwar bei einer geeignet konstruierten Klappe reduzieren, doch hat diese den Nachteil, dass sie zum Ausschwenken eine erhebliche räumliche Tiefe benötigt, die als Nutzvolumen für den Lagerraum verloren geht. Es wäre zwar denkbar, diesen Platzbedarf zu reduzieren, indem man statt einer einzelnen breiten Klappe eine Mehrzahl von schmalen Klappen einsetzt, doch geht dies auf Kosten der Robustheit des Kältegeräts und verteuert seine HerstelLung.

Ein No-Frost-Kältegerät gemäß dem Oberbegriff des Anspruchs 1 ist z.B. aus WO-A-02/16843 bekannt.

Ziel der Erfindung ist, ein No-Frost-Kältegerät mit einem robusten Regelungsmechanismus für den Luftaustausch zwischen den beiden Kammern zu schaffen, bei dem sowohl die Gefahr des Festfrierens als auch der Platzbedarf minimiert sind.

Die Aufgabe wird erfindungsgemäß gelöst durch ein Kältegerät mit den Merkmalen des Anspruchs 1.

Durch die Drehbarkeit des Regelkörpers um eine zur Ebene der Luftdurchgangsöffnung senkrechte Achse wird eine geringe, von der jeweiligen Stellung des Regelkörpers unabhängige Bautiefe des Regelungsmechanismus erreicht, und außerdem ermöglicht es die drehbare Aufhängung des Regelkörpers, jeden Kontakt zwischen dem Regelkörper und ihn tragenden Teilen abseits der Achse zu vermeiden. Ein eventuelles Festfrieren in unmittelbarer Nachbarschaft der Achse wirft aber keine schwerwiegenden Probleme auf, da der Regelkörper sich mit geringem Kraftaufwand losbrechen lässt.

Gemäß der Erfindung ist die Luftdurchgangsöffnung in der Trennwand zwischen Lagerkammer und Verdampferkammer gebildet.

Die Durchgangsöffnung erstreckt sich mit Bezug auf die Drehachse über einen Winkel von weniger als 180°, so dass eine zu der Luftdurchgangsöffnung kongruente Aussparung des Regelkörpers stets in eine Position bringbar ist, in der sich Luftdurchgangsöffnungen und Aussparungen mit Sicherheit nicht überlappen.

Vorzugsweise ist der Regelkörper als Kreisscheibe geformt. Dies erleichtert seine Anbringung in einem zylindrischen Gehäuse, und außerdem kann der Rand eines solchen Regelkörpers leicht als Kurvenscheibe gestaltet werden, die zum Steuern insbesondere eines Antriebsmotors für den Regelkörper mit Hilfe eines Schalters brauchbar ist.

Die Achse ist vorzugsweise durch eine Welle eines Antriebsmotors des Regelkörpers gebildet, die in einer Hülse des Regelkörpers aufgenommen ist. Um den Regelkörper an der Welle fest aber leicht lösbar zu verankern, kann ein Riegelelement vorgesehen werden, das in einer gemeinsamen, quer zur Achse orientierten Ebene gebildete Schlitze der Hülse und der Welle kreuzt und so eine axiale Verschiebung beider gegeneinander blockiert.

Vorzugsweise ist das Riegelelement an einem Ende fest an dem Regelkörper gehalten und weist ein elastisch bewegliches zweites Ende auf. Durch Verschieben des Riegelelements aus einem der Schlitze heraus ist die axiale Kopplung des Regelkörpers an die Welle leicht aufhebbar.

Zum Schutz des Riegelelements oder um ein Sichverfangen von Fremdkörpern zu verhindern, ist das Riegelelement vorzugsweise zwischen dem Regelkörper und einer Wand, an der der Regelkörper drehbar gehalten ist, insbesondere der Trennwand, eingeschlossen, und seine Betätigbarkeit und Lösbarkeit ist gewährleistet, indem in dem Regelkörper ein Loch geschaffen ist, durch welches hindurch das freie Ende des Riegelelements - gegebenenfalls mit Hilfe von Werkzeug - betätigbar ist.

Ferner ist bevorzugt, dass die Luftdurchgangsöffnung in einem im wesentlichen zyündrischen Schalenelement gebildet ist, das in eine Wand wie etwa die Trennwand eingefügt ist. Dieses Schalenelement kann zusammen mit dem Regelkörper als Baugruppe vormontiert und dann in eine hierfür vorgesehene Aussparung der Wand eingesetzt werden, wodurch sich die Montage des Kältegeräts vereinfacht.

Eine Heizeinrichtung kann am Umfang des Schalenelements vorgesehen sein, um ein Festfrieren des Regelkörpers auch im Bereich seiner Umfangsfläche sicher auszuschließen.

Der bereits erwähnte Antriebsmotor für den Regelkörper ist vorzugsweise ebenfalls am Schalenelement vormontiert, um gemeinsam mit diesem in das Kältegerät eingesetzt zu werden.

Um strömungsbehindernde Turbulenz und das Eindringen von Feuchtigkeit zwischen den Regelkörper einerseits und die Zwischenwand bzw. das Schalenelement andererseits möglichst zu vermeiden, ist vorzugsweise an der Luftdurchgangsöffnung ein dem Regelelement zugewandter Stutzen gebildet.

Um an dem Stutzen haftende Feuchtigkeit daran zu hindern, die Welle zu erreichen, sind die Wände des Stutzens oberhalb der Welle vorzugsweise nach oben konvex.

Weitere Vorteile der Erfindung ergeben sich aus der nachfolgenden Beschreibung eines Ausführungsbeispiels mit Bezug auf die beigefügten Figuren. Es zeigen:
- Fig. 1, Fig. 2: jeweils eine auseinandergezogene Darstellung der einzelnen Komponenten einer Baugruppe zur Luftdurchgangsregelung an einer Zwischenwand eines No-Frost-Kältegeräts,
- Fig. 3: eine perspektivische Ansicht einer äußeren Schale der Baugruppe,
- Fig. 4: eine perspektivische Ansicht des Regelkörpers der Baugruppe,
- Fig. 5: ein Detail des Regelkörpers in Draufsicht,
- Fig. 6: eine teilweise aufgeschnittene Draufsicht auf die Vorderseite der Baugruppe, und
- Fig. 7: eine perspektivische Ansicht der Rückseite der Baugruppe.

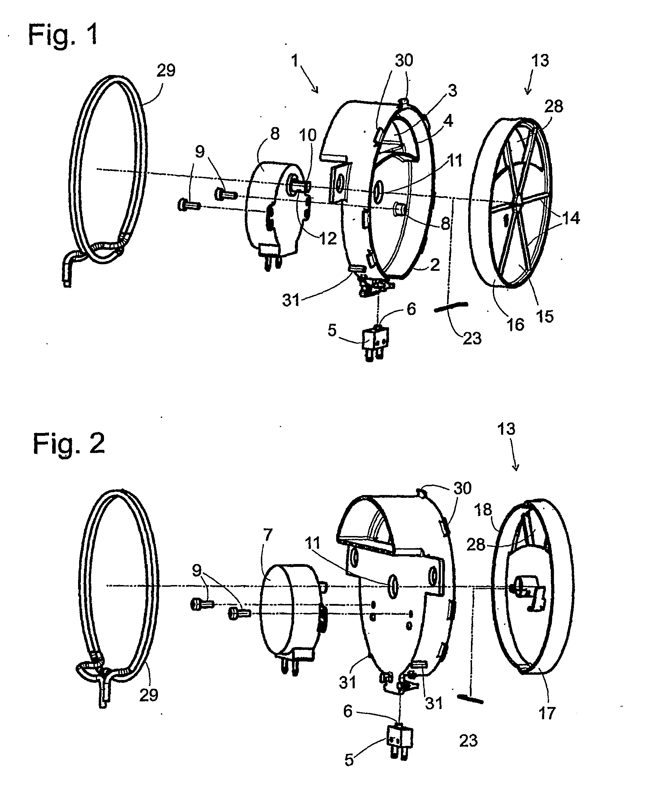

Die Figs. 1 und 2 sind jeweils perspektivische auseinandergezogene Darstellungen einer Baugruppe, die vorgesehen ist, um an einem Durchgang oder in einem Durchgang einer Zwischenwand zwischen der Lagerkammer und der Verdampferkammer eines No-Frost-Kältegeräts, vorzugsweise unmittelbar unterhalb der Decke der Lagerkammer, montiert zu werden, um dort eine Luftdurchtrittsöffnung mit regelbarem Querschnitt zu bilden. Fig. 1 zeigt die Baugruppe mehr von der Vorderseite und Fig. 2 mehr von der Rückseite. Die Bezeichnungen Vorder- und Rückseite sind dabei willkürlich gewählt. Die Baugruppe kann in die Zwischenwand mit der Verdampferkammer zugewandter Vorderseite und der Lagerkammer zugewandter Rückseite oder umgekehrt montiert werden, wobei allerdings die Anbringung mit der Lagerkammer zugewandter Rückseite für die hier gezeigte Ausgestaltung bevorzugt ist.

Die Baugruppe setzt sich im wesentlichen zusammen aus einer flachzylindrischen, an einer Stirnseite offenen Schale 1, die eine äußere Begrenzung der Baugruppe bildet, und deren zylindrische Außenwand 2 im montierten Zustand in den kreisrunden Durchgang der Zwischenwand eingefügt ist. Die Schale 1 und die Zwischenwand bilden so eine Trennwand zwischen Verdampferkammer und Lagerkammer, die bis auf eine in der Schale 1 selbst gebildete Luftdurchgangsöffnung 3 geschlossen ist. Die Einbaulage der Baugruppe ist dabei so gewählt, dass die Luftdurchgangsöffnung 3 so hoch wie möglich liegt. Ein kurzer Stutzen 4 mit sichelförmigem Querschnitt ist an die Innenseite des Bodens der Schale 1 angeformt und erstreckt sich in deren Innenraum. Ein äußerer Wandabschnitt des Stutzens 4 erstreckt sich in einem geringen Abstand zur Außenwand 2 der Schale 1 konzentrisch zu dieser. Ein innerer Wandabschnitt des Stutzens 4 ist ebenfalls kreisbogenförmig gekrümmt, mit einem geringeren Krümmungsradius als der äußere Wandabschnitt.

Die Außenwand 2 ist an einer Stelle ihres Umfangs durchbrochen, um eine Halterung für einen Taster 5 zu bilden, von dem eine Tastspitze 6 im montierten Zustand ins Innere der Schale 1 vorspringt.

Ein Elektromotor 7, vorzugsweise ein Synchron-Getriebemotor oder ein Schrittmotor, ist vorgesehen, um an einer Außenfläche des Bodens der Schale 1 montiert zu werden. Zwei hohle Zapfen 8, die vorgesehen sind, um die Gewinde von Schrauben 9 zur Befestigung des Elektromotors 7 aufzunehmen, erstrecken sich vom Boden der Schale 1 in deren Innenraum hinein. Eine Welle 10 des Motors greift durch eine zentrale Bohrung 11 der Schale 1 in deren Innenraum ein. Wie Fig. 1 zeigt, ist die Welle 10 mit einem quer zur Achse orientierten Schlitz 12 versehen.

Ein Regelkörper 13, der zur Anbringung im. Innenraum der Schale 1 vorgesehen ist, hat eine Form ähnlich der eines Rades, mit einer durch Speichen 14 versteiften Radscheibe 15 und einer die Radscheibe 15 umschließenden Umfangsfläche 16. Die Umfangsfläche 16 ist an ihrer Vorderseite kreisrund, wie in Fig. 1 zu sehen; zur Rückseite hin ist sie als Kurvenscheibe geformt, mit zwei Abschnitten 17, 18 von unterschiedlichem Radius, die sich jeweils über etwa die Hälfte des Umfangs des Regelkörpers 13 erstrecken. Dabei sind die Radien der Abschnitte 17, 18 so gewählt, dass wenigstens der Abschnitt 17 mit dem größeren Radius, wenn er vor dem Taster 5 liegt, dessen Tastspitze 6 eindrückt und so einen elektrischen Kontakt des Tasters 5 offen (oder geschlossen) hält, der geschlossen (oder offen) ist, wenn der Abschnitt 18 mit dem kleineren Radius dem Taster 5 gegenüberliegt.

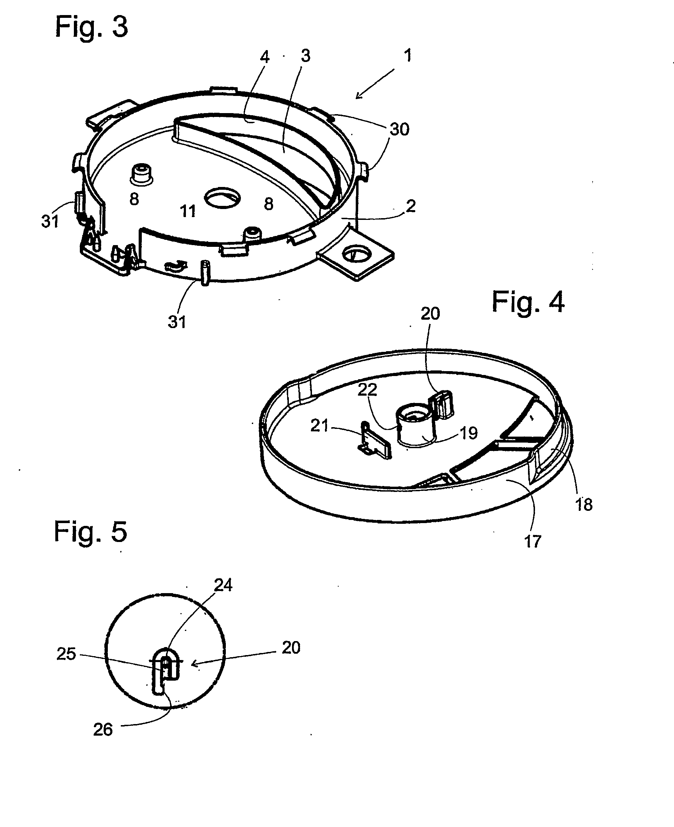

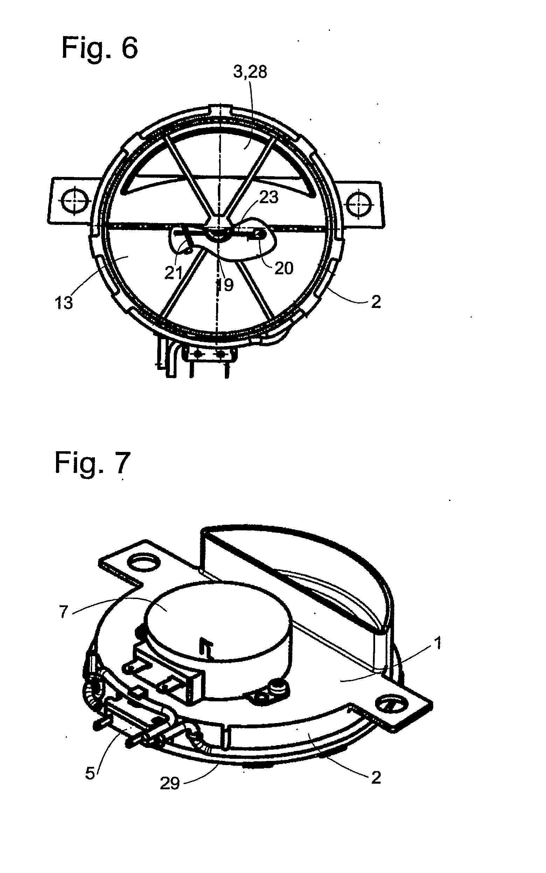

An der dem Boden der Schale 1 zugewandten Innenseite der Radscheibe 15 (siehe auch Fig. 4) sind ein zentraler Stutzen 19, ein in Fig. 5 in vergrößerter Draufsicht gezeigter Schaft 20 und ein Steg 21 angeformt. Der Stutzen 19 ist vorgesehen, um die Welle 10 des Elektromotors 7 kraft- und formschlüssig aufzunehmen. In dem Stutzen 19 ist seitlich ein Schlitz 22 gebildet, der, wenn die Welle 10 korrekt in den Stutzen 19 eingeführt ist, in einer Ebene mit dessen Schlitz 12 liegt. Der Schaft 20 und der Steg 21 dienen zur Halterung eines Riegelelements 23 (siehe Fig. 1, 2) in Form eines L-förmig gebogenen flexiblen Drahtes. Die Lage des Stutzens 19, des Schaftes 20, des Steges 21 und des Drahtes 23 sind insbesondere in Fig. 6 zu erkennen, die eine teilaufgeschnittene Draufsicht auf die erfindungsgemäße Baugruppe zeigt. Ein kürzerer Schenkel dieses Drahtes 23 ist in eine Bohrung 24 des Schafts 20 eingesteckt; sein längerer Abschnitt verläuft durch einen Kanal 25 am freien Ende des Schaftes 20 und ist durch einen am Schaft angeformten Vorsprung 26 unter einer Biegebelastung gehalten, die den längeren Abschnitt in die Schlitze 12, 22 hineingedrückt hält. Das freie Ende des längeren Schenkels liegt auf der freien Kante des Steges 21 auf und kreuzt ein Loch 27, das in der Radscheibe 15 gebildet ist. Durch Einführen eines Werkzeugs durch das Loch 27 und Verschieben des längeren Schenkels des Drahtes 23 nach unten in Fig. 6 kann dieser aus den Schlitzen 12, 22 verdrängt werden, und der Regelkörper 13 kann aus der Schale 1 entnommen werden.

Bei der in Fig. 6 gezeigten Konfiguration der Baugruppe überdecken sich kongruent ein Fenster 28 des Regelkörpers 13 und der Stutzen 4 an der Luftdurchgangsöffnung der Schale 1. Der Taster 5 liegt der Umfangsfläche 16 in unmittelbarer Nähe zu einem Übergang zwischen den Abschnitten 17, 18 gegenüber. Um die Luftdurchgangsöffnung 3 zu schließen, treibt eine (nicht dargestellte) mit dem Taster 5 verbundene Treiberschaltung den Elektromotor 7 so lange zu einer Drehung in einer festgelegten Richtung an, bis sie einen Wechsel des Kontaktzustandes des Tasters 5, von leitend zu nichtleitend oder umgekehrt, erkennt. Wenn dies der Fall ist, hat der Regelkörper 13 eine Drehung von 180° zurückgelegt, die Luftdurchgangsöffnung 3 ist versperrt, und der Taster 5 befindet sich wieder in unmittelbarer Nähe zu einem Übergang zwischen den Abschnitten 17, 18. Um die Luftdurchgangsöffnung 3 wieder zu öffnen, genügt es also, den Elektromotor 7 wiederum so lange anzutreiben, bis eine Änderung des Kontaktzustandes des Tasters 5 erfasst wird.

Eine Heizeinrichtung in Form eines Heizdrahtes 29 ist an der Außenseite der Schale 1 montiert. Sie ist fixiert zwischen einer Mehrzahl von Krallen 30, die sich vom vorderen Rand der Schale 1 aus nach außen erstrecken, und den diesen Krallen 30 zugewandten Spitzen von an der Umfangsfläche der Schale 1 ausgeformten Stegen 31. Der Heizdraht 30 verhindert ein Gefrieren von eindringenden Wassertropfen zwischen der Umfangsfläche 16 des Regelkörpers 3 und der dieser gegenüberliegenden Außenwand 2 der Schale 1, das zu einem Festfrieren des Regelkörpers 13 führen könnte. Eine Beheizung anderer Regionen der Baugruppe ist nicht erforderlich, denn eine zum Festfrieren ausreichende körperliche Nähe zwischen beweglichen und nichtbeweglichen Teilen der Baugruppe, an denen sich Eis bilden könnte, gibt es allenfalls noch in unmittelbarer Nachbarschaft zur Welle 10. Die Welle 10 ist jedoch gegen von oben herabfließende Feuchtigkeit durch den vorspringenden Stutzen 4 und insbesondere durch dessen Querschnittsform, die eventuell an ihm oder der Schale 1 vorhandene Wassertropfen in seitlicher Richtung, von der Welle 10 fort, ableitet, geschützt. Außerdem steht in unmittelbarer Nachbarschaft der Welle 10 ein hohes Drehmoment des Motors 7 zur Verfügung, um eine festgefrorene Stelle aufzubrechen. Da wie in Fig. 7 gezeigt der Motor 7 in unmittelbarem Kontakt mit der Schale 1 angebracht ist, kann ferner, wenn der Motor von der Treiberschaltung längere Zeit mit Betriebsspannung versorgt wird, ohne dass der Taster 5 eine entsprechende Drehung des Regelkörpers erfasst und den Motor wieder abschaltet, auch die Betriebsabwärme des Motors 7 dazu führen, dass eine festgefrorene Stelle in Nähe der Welle 10 wieder auftaut und der Regelkörper wieder drehbar wird.

## Patentansprüche

1. No-Frost-Kältegerät, mit einer Lagerkammer und einer Verdampferkammer, einem Luftdurchgang, der Luftaustausch zwischen Lagerkammer und Verdampferkammer ermöglicht, und einem an einer Luftdurchgangsöffnung (3) des Luftdurchgangs angeordneten Regelkörper (13), der zwischen Stellungen verstellbar ist, in denen er den freien Querschnitt der Luftdurchgangsöffnung (3) unterschiedlich stark überdeckt, wobei der Regelkörper (13) um eine zu der Ebene der Luftdurchgangsöffnung (3) senkrechte Achse drehbar ist, **dadurch gekennzeichnet, dass** die Lagerkammer und die Verdampferkammer durch eine Trennwand getrennt sind, dass die Luftdurchgangsöffnung (3) in der Trennwand zwischen der Lagerkammer und der Verdampferkammer gebildet ist, und dass der Regelkörper (13) eine vollständige Trennung von Lagerkammer und Verdampferkammer ermöglicht.

2. No-Frost-Kältegerät nach Anspruch 1, **dadurch gekennzeichnet, dass** der Regelkörper (13) als Kreisscheibe geformt ist

3. No-Frost-Kältegerät nach Ansprüch 2, **dadurch gekennzeichnet, dass** der Regelkörper (13) eine als Kurvenscheibe (17, 18) geformte Umfangsfläche aufweist.

4. No-Frost-Kältegerät nach Anspruch 3, **dadurch gekennzeichnet, dass** an der Trennwand ein mit der Kurvenscheibe wechselwirkender Schalter (5) zum Steuern eines Antriebsmotors (7) für den Regelkörper (13) angebracht ist.

5. No-Frost-Kältegerät nach einem der vorhergehenden Ansprüche, **dadurch gekennzeichnet, dass** die Achse durch eine Welle (10) eines Antriebsmotors (7) des Regelkörpers (13) gebildet ist, die in einer Hülse des Regelkörpers aufgenommen ist.

6. No-Frost-Kältegerät nach Anspruch 5, **dadurch gekennzeichnet, dass** ein an die Luftdurchgangsöffnung (3) angeformter Stutzen Wände aufweist, die oberhalb der horizontalen Welle (10) nach oben konvex sind.

7. No-Frost-Kältegerät nach Anspruch 5 oder 6, **dadurch gekennzeichnet, dass** die Hülse und die Welle (10) jeweils einen Schlitz (22) in einer quer zur Achse orientierten Ebene aufweisen, und dass ein Riegelelement (23) die Schlitze (22) kreuzt.

8. No-Frost-Kältegerät nach Anspruch 7, **dadurch gekennzeichnet, dass** das Riegelelement (23) ein fest an dem Regelkörper (13) gehaltenes erste Ende und ein elastisch bewegliches zweites Ende aufweist, das verschiebbar ist, um das Riegelelement (23) aus wenigstens einem der Schlitze (22) zu verdrängen.

9. No-Frost-Kältegerät nach Anspruch 8, **dadurch gekennzeichnet, dass** das Riegelelement (23) zwischen dem Regelkörper (13) und einer Wand, an der der Regelkörper (13) drehbar gehalten ist, eingeschlossen ist und das freie Ende des Riegelelements (23) durch ein Loch des Regelkörpers (13) hindurch betätigbar ist.

10. No-Frost-Kältegerät nach einem der vorhergehenden Ansprüche, **dadurch gekennzeichnet, dass** die Luftdurchgangsöffnung (3) in einem im wesentlichen zylindrischen Schalenelement (1) gebildet ist, das in die Trennwand eingefügt ist.

11. No-Frost-Kältegerät nach Anspruch 10, **dadurch gekennzeichnet, dass** eine Heizeinrichtung (29) am Umfang des Schalenelements (1) angebracht ist.

12. No-Frost-Kältegerät nach Anspruch 10 oder 11, **dadurch gekennzeichnet, dass** ein Antriebsmotor (7) zum Drehen des Regelkörpers (13) am Schalenelement (1) montiert ist.

13. No-Frost-Kältegerät nach einem der vorhergehenden Ansprüche, **dadurch gekennzeichnet, dass** ein dem Regelkörper (13) zugewandter Stutzen (4) an der Luftdurchgangsöffnung (3) gebildet ist.

## Claims

1. No-frost refrigerating appliance, with a storage chamber and an evaporator chamber, an air passage which enables air exchange between storage chamber and evaporator chamber, and a regulating body (13), which is arranged at an air passage opening (3) of the air passage and which is adjustable between settings in which it covers the free cross-section of the air passage opening (3) to different extent, wherein the regulating body (13) is rotatable about an axis perpendicular to the plane of the air passage opening (3), **characterised in that** the storage chamber and the evaporator chamber are separated by a partition wall, that the air passage opening (3) is formed in the partition wall between the storage chamber and the evaporator chamber and that the regulating body (13) enables complete separation of storage chamber and evaporator chamber.

2. No-frost refrigerating appliance according to claim 1, **characterised in that** the regulating body (13) is formed as a circular disc.

3. No-frost refrigerating appliance according to claim 2, **characterised in that** the regulating body (13) has a circumferential surface formed as a cam disc (17, 18).

4. No-frost refrigerating appliance according to claim 3, **characterised in that** a switch (5), which interacts with the cam disc, for controlling a drive motor (7) for the regulating body (13) is mounted at the partition wall.

5. No-frost refrigerating appliance according to one of the preceding claims, **characterised in that** the axis is formed by a shaft (10) of a drive motor (7) of the regulating body (13), the shaft being received in a sleeve of the regulating body.

6. No-frost refrigerating appliance according to claim 5, **characterised in that** a support integrally formed at the air passage opening (3) has walls which are upwardly convex above the horizontal shaft (10).

7. No-frost refrigerating appliance according to claim 5 or 6, **characterised in that** the sleeve and the shaft (10) each have a slot (22) in a plane oriented transversely to the axis and that a locking element (23) crosses the slots (22).

8. No-frost refrigerating appliance according to claim 7, **characterised in that** the locking element (23) has a first end fixedly held at the regulating body (13) and a resiliently movable second end which is displaceable so as to urge the locking element (23) out of at least one of the slots (22).

9. No-frost refrigerating appliance according to claim 8, **characterised in that** the locking element (23) is enclosed between the regulating body (13) and a wall at which the regulating body (13) is rotatably mounted and the free end of the locking element (23) is actuable via a hole of the regulating body (13).

10. No-frost refrigerating appliance according to one of the preceding claims, **characterised in that** air passage opening (3) is formed in a substantially cylindrical dish element (1), which is inserted into the partition wall.

11. No-frost refrigerating appliance according to claim 10, **characterised in that** a heating device (29) is mounted at the circumference of the dish element (1).

12. No-frost refrigerating appliance according to claim 10 or 11, **characterised in that** a drive motor (7) for rotating the regulating body (13) is mounted at the dish element (1).

13. No-frost refrigerating appliance according to one of the preceding claims, **characterised in that** a support (4) facing the regulating body (13) is formed at the air passage opening (3).

## Revendications

1. Appareil frigorifique sans givre, avec une chambre de stockage et une chambre d'évaporateur, un passage d'air qui permet l'échange d'air entre la chambre de stockage et la chambre d'évaporateur et un corps de régulation (13) disposé sur une ouverture (3) de passage d'air du passage d'air et qui peut être déplacé entre des positions dans lesquelles il recouvre plus ou moins fortement la section transversale libre de l'ouverture (3) de passage d'air, le corps de régulation (13) pouvant tourner autour d'un axe perpendiculaire au plan de l'ouverture (3) de passage d'air, **caractérisé en ce que** la chambre de stockage et la chambre d'évaporateur sont séparées par une paroi de séparation, **en ce que** l'ouverture (3) de passage d'air est formée dans la paroi de séparation entre la chambre de stockage et la chambre d'évaporateur et **en ce que** le corps de régulation (13) permet une séparation complète de la chambre de stockage et de la chambre d'évaporateur.

2. Appareil frigorifique sans givre selon la revendication 1, **caractérisé en ce que** le corps de régulation (13) présente la forme d'un disque circulaire.

3. Appareil frigorifique sans givre selon la revendication 2, **caractérisé en ce que** le corps de régulation (13) présente une surface périphérique configurée comme came (17, 18).

4. Appareil frigorifique sans givre selon la revendication 3, **caractérisé en ce qu'**un commutateur (5) qui coopère avec la came pour commander un moteur d'entraînement (7) du corps de régulation (13) est installé sur la paroi de séparation.

5. Appareil frigorifique sans givre selon l'une des revendications précédentes, **caractérisé en ce que** l'axe est formé par un arbre (10) d'un moteur d'entraînement (7) du corps de régulation (13), lequel axe est reçu dans une douille du corps de régulation.

6. Appareil frigorifique sans givre selon la revendication 5, **caractérisé en ce qu'**une tubulure formée sur l'ouverture (3) de passage d'air a des parois convexes vers le haut, au-dessus de l'arbre horizontal (10).

7. Appareil frigorifique sans givre selon les revendications 5 ou 6, **caractérisé en ce que** la douille et l'arbre (10) présentent chacun une fente (22) située dans un plan orienté transversalement par rapport à l'axe et **en ce qu'**un élément de verrouillage (23) croise la fente (22).

8. Appareil frigorifique sans givre selon la revendication 7, **caractérisé en ce que** l'élément de verrouillage (23) présente une première extrémité maintenue fixe sur le corps de régulation (13) et une deuxième extrémité élastiquement mobile qui peut être déplacée pour repousser l'élément de verrouillage (23) hors d'au moins une des fentes (22).

9. Appareil frigorifique sans givre selon la revendication 8, **caractérisé en ce que** l'élément de verrouillage (23) est enfermé entre le corps de régulation (13) et une paroi sur laquelle le corps de régulation (13) est maintenu de façon à pouvoir tourner et **en ce que** l'extrémité libre de l'élément de verrouillage (23) peut être actionnée à travers un trou du corps de régulation (13).

10. Appareil frigorifique sans givre selon l'une des revendications précédentes, **caractérisé en ce que** l'ouverture (3) de passage d'air est formée dans un élément (1) d'enveloppe essentiellement cylindrique qui est inséré dans la paroi de séparation.

11. Appareil frigorifique sans givre selon la revendication 10, **caractérisé en ce qu'**un dispositif de chauffage (29) est installé à la périphérie de l'élément (1) d'enveloppe.

12. Appareil frigorifique sans givre selon les revendications 10 ou 11, **caractérisé en ce qu'**un moteur à entraînement (7) qui sert à faire tourner le corps de régulation (13) est monté sur l'élément (1) d'enveloppe.

13. Appareil frigorifique sans givre selon l'une des revendications précédentes, **caractérisé en ce qu'**une tubulure (4) tournée vers le corps de régulation (13) est formée sur l'ouverture (3) de passage d'air.
